# EUROPÄISCHE PATENTSCHRIFT

(11) **EP 0 534 291 B1**
(45) Veröffentlichungstag und Bekanntmachung des Hinweises auf die Patenterteilung: **10.08.1994**
(21) Anmeldenummer: 92115794.7
(22) Anmeldetag: 16.09.1992
(51) Int. Cl.: B60M 1/34

(54) **Zu einer mehradrigen Schleifleitung zusammenfassbare isolierte Stromschiene**
Multiconductor contact line to be assembled from isolated current rails
Ligne de contact multiconducteur à être assemblée de rails conducteurs isolés

(30) Priorität: 24.09.1991 DE 4131675
(43) Veröffentlichungstag der Anmeldung: 31.03.1993
(73) Patentinhaber: Paul Vahle GmbH & Co. KG, D-59174 Kamen (DE)
(72) Erfinder: Hillmann, Willi, W-4708 Kamen (DE)
(74) Vertreter: Henfling, Fritz, Dipl.-Ing.

(56) Entgegenhaltungen:
- FR-A- 2 376 771
- US-A- 2 278 761

## Beschreibung

Die Erfindung betrifft eine zu einer mehradrigen Schleifleitung zusammenfaßbare Stromschiene der im Oberbegriff des Patentanspruchs 1 umrissenen Gattung. Eine solche Stromschiene ist beispielsweise der DE-PS 12 71 750 zu entnehmen.

Nach der DE-PS 12 71 750 weisen beide Schenkel des Isolierprofils der zu einer mehradrigen Schleifleitung zusammenfaßbaren Stromschiene gegenüber den die Stromschiene umgreifenden Schultern zurückspringende Überstände auf, die gemeinsam eine Führung für einen in das Isolierprofil hineinragenden, die Stromschiene kontaktierenden Stromabnehmer bilden.

Die Verlegung solcher mehradriger Schleifleitungen erfolgt vielfach unter räumlich beengten Verhältnissen, durch die die Anzahl der zu einer solchen Schleifleitung zusammenfaßbaren Stromschienen begrenzt wird.

Ausgehend vom im vorausgehenden umrissenen Stand der Technik liegt der Erfindung die Aufgabe zugrunde, auch unter beengten räumlichen Verhältnissen die Möglichkeit zu eröffnen, die Anzahl der zu einer Schleifleitung zusammenfaßbaren Stromschienen zu vergrößern.

Die Aufgabe wird mit einer gattungsgemäßen Stromschiene gelöst, die erfindungsgemäß entsprechend dem kennzeichnenden Teil des Patentanspruchs 1 ausgebildet ist.

Dadurch, daß die Führungen für die Schleifstücke der Stromabnehmer aneinander angrenzender Stromschienen jeweils von einem gemeinsamen Schenkelüberstand gebildet werden, wird erkennbar an Baubreite eingespart, womit die Möglichkeit eröffnet wird, bei vorgegebenen Einbaumaßen der Schleifleitung weitere Stromschienen zuzuordnen.

Vorgesehen sein kann eine kraftschlüssige oder aber eine formschlüssige Zusammenfassung der Stromschienen zur Schleifleitung, gegebenfalls auch eine kombinierte kraft- und formschlüssige Zusammenfassung. Für die formschlüssige Zusammenfassung der Stromschienen zur Schleifleitung kann das Isolierprofil, in das die Sromschiene eingelagert ist, an einer Längsseite mit einer hinterschnittenen Längsnut versehen sein und an der anderen Längsseite mit einer dementsprechenden, sich über die Länge des Profils erstreckenden Feder, die sich bei der Zusammenfassung der Stromschienen in die Längsnut des angrenzenden Isolierprofils einfügt.

In Ausgestaltung ist der Schenkelüberstand des Isolierprofils unter Bildung einer das Isolierprofil der angrenzenden Stromschiene unterfangenden Schulter nach außen abgesetzt. Dadurch wird die lagerechte Zuordnung der zur Schleifleitung zusammenzufassenden Stromschienen auch dann sichergestellt bzw. erleichtert, wenn eine lediglich kraftschlüssige Zusammenfassung der Stromschienen zur Schleifleitung vorgesehen ist.

Ein sich zum freien Ende hin verjüngender Schenkelüberstand erleichtert das Einfügen des die Stromschiene kontaktierenden Stromabnehmers in das Isolierprofil.

Eine im Isolierprofil vorgesehene, entlang der Innenkante des durch den Schenkelüberstand definierten Bereichs des Profils vorgesehene Sollbruchstelle eröffnet die Möglichkeit, die Führung des Isolierprofils der letzten der zur Schleifleitung zusammengefaßten Stromschienen für den dieser Stromschiene zuzuordnenden Stromabnehmer raumsparend allein durch den noch an das Profil anzusetzenden Schenkelüberstand zu vervollständigen.

An der Rückseite des die Stromschiene aufnehmenden Isolierprofils in Abständen vorgesehene Querbohrungen dienen der Installierung der Schleifleitung.

Werden die Stromschienen und das flexibel ausgebildete Isolierprofil gesondert an den Ort der Verlegung der Schleifleitung befördert und erst an Ort und Stelle zusammengefügt, besteht die Möglichkeit, das Vormaterial in Bunden oder Ringen anzuliefern, das dann auch in entsprechenden Längen zunächst zu isolierten Stromschienen und die sodann zur Schleifleitung zusammengefaßt werden können.

In der Zeichnung ist die Erfindung anhand von Ausführungsbeispielen weitergehend erläutert. Es zeigen:
- Figur 1: eine erste Ausführungsform der neuen isolierten Stromschiene im Querschnitt,
- Figur 2: eine zweite Ausführungsform der Stromschiene,
- Figur 3: eine weitere Ausführungsform der Stromschiene,
- Figur 4: eine Mehrzahl von in Ausbildung einer Schleifleitung einander zugeordneter Stromschienen nach Figur 1,

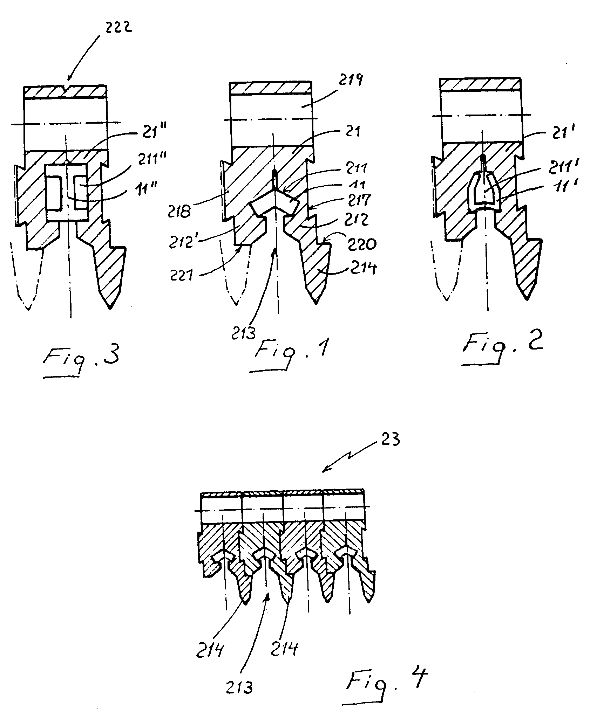

die Figuren 1 bis 4 im Querschnitt.

In der Zeichnung sind mit 11, 11′, 11′′ voneinander abweichende Querschnitte aufweisende Stromschienen bezeichnet. Die Stromschienen 11, 11′, 11′′ sind eingelagert in die Isolierprofile 21, 21′, 21′′, die sich lediglich in der Ausbildung ihrer jeweiligen Aufnahmen 211, 211′, 211′′ für die Stromschienen 11, 11′, 11′′ unterscheiden. Im übrigen stimmen die Isolierprofile 21, 21′, 21′′ in ihrer konstruktiven Auslegung überein. Sie weisen also Schultern 212, 212′ auf, die die in die Aufnahmen 211, 211′ bzw. 211′′ eingelagerten Stromschienen 11, 11′ bzw. 11′′ beidseitig unter Belassung eines Durchgangs 213 für das Schleifstück des Stromabnehmers unterfangen. Charakteristisch für das Isolierprofil 21, 21′ bzw. 21′′ ist, daß nur ein Schenkelüberstand 214 ausgebildet ist, der in Verbindung mit dem Schenkelüberstand 214 des Isolierprofils 21, 21′, 21′′ des an der vom Schenkelüberstand 214 des Isolierprofils einer ersten Stromschiene abgekehrten Seite angesetzten zweiten Stromschiene die Führung 216 (Fig. 4) für den Stromabnehmer bildet. Der nach außen abgesetzte Schenkelüberstand 214 unterfängt 221 mit der dadurch ausgebildeten Schulter 220 das Isolierprofil, z.B. 21, der vorgelagerten Stromschiene.

Bei der dargestellten speziellen Ausführungsform der neuen isolierten Stromschiene ist in an sich bekannter Weise eine Nut-Federverbindung 217, 218 aneinander angrenzender Stromschienen bzw. Isolierprofile vorgesehen. Das schließt eine Zusammenfassung der Stromschienen einer Schleifleitung 23 (Fig. 4) allein durch die Stromschienen an ihrer Rückseite querende Spannelemente, etwa sich durch die Bohrungen 219 erstreckende Spannschrauben nicht aus. Die Bohrungen 219 stehen dann auch zum Abhängen bzw. Anschlagen der Schleifleitung 23 zur Verfügung.

Eine Sollbruchstelle 222 (Fig. 3) eröffnet die Möglichkeit, das Endprofil raumsparend auf den tatsächlichen Bedarf zu reduzieren.

## Patentansprüche

1. Zu einer mehradrigen Schleifleitung zusammenfaßbare Stromschiene, die im Grund eines im wesentlichen U-förmigen Isolierprofils (21) von in das Profil vorspringenden Schultern (212,212′) umgriffen angeordnet von einem in das Isolierprofil hineinragenden Stromabnehmer kontaktierbar ist, dadurch gekennzeichnet, daß einer der Schenkel des Isolierprofils (21) einen gegenüber der Schulter (212) zurückspringenden Schenkelüberstand (214) aufweist, der zusammen mit dem Schenkelüberstand (214) des an der vom Schenkelüberstand (214) des Isolierprofils (21) abgekehrten Seite angrenzenden Isolierprofils (21) einer die mehradrige Schleifleitung ausbildenden weiteren Stromschiene (11) eine Führung für den Stromabnehmer bildet.

2. Zu einer mehradrigen Schleifleitung zusammenfaßbare Stromschiene nach Anspruch 1, dadurch gekennzeichnet, daß die Gesamtheit der die Schleifleitung bildenden Stromschienen kraftschlüssig zusammenfaßbar ist.

3. Zu einer mehradrigen Schleifleitung zusammenfaßbare Stromschiene nach Anspruch 1 oder Anspruch 2, dadurch gekennzeichnet, daß die Gesamtheit der die Schleifleitung bildenden Stromschienen formschlüssig zusammenfaßbar ist.

4. Zu einer mehradrigen Schleifleitung zusammenfaßbare Stromschiene nach Anspruch 3, dadurch gekennzeichnet, daß das Isolierprofil (21) an einer Längsseite mit einer hinterschnittenen Längsnut (217) versehen ist und an der anderen Längsseite mit einer dementsprechenden, sich über die Länge des Profils (21) erstreckenden Feder (218).

5. Zu einer mehradrigen Schleifleitung zusammenfaßbare Stromschiene nach einem der Ansprüche 1 bis 4, dadurch gekennzeichnet, daß der Schenkelüberstand (214) des Isolierprofils (21) unter Bildung einer das Isolierprofil (21) der angrenzenden Stromschiene (11) unterfangenden Schulter (220) nach außen abgesetzt ist.

6. Zu einer mehradrigen Schleifleitung zusammenfaßbare Stromschiene nach einem der Ansprüche 1 bis 5, gekennzeichnet durch einen sich zum freien Ende hin verjüngenden Schenkelüberstand (214).

7. Zu einer mehradrigen Schleifleitung zusammenfaßbare Stromschiene nach einem der Ansprüche 1 bis 6, gekennzeichnet durch eine Sollbruchstelle (222) des Isolierprofils (21) entlang der Innenkante des durch den Schenkelüberstand (214) definierten Bereichs des Profils (21).

8. Zu einer mehradrigen Schleifleitung zusammenfaßbare Stromschiene nach einem der Ansprüche 1 bis 7, dadurch gekennzeichnet, daß an der Rückseite des Isolierprofils in Abständen Querbohrungen (219) vorgesehen sind.

9. Zu einer mehradrigen Schleifleitung zusammenfaßbare Stromschiene nach einem der Ansprüche 1 bis 8, gekennzeichnet durch eine flexible Ausbildung des Isolierprofils (21).

## Claims

1. A multi-conductor contact line to be assembled from current-collecting rails, each disposed in the base of a substantially U-shaped insulation profile (21) so as to be gripped by shoulders (212, 212′), which protrude into the profile, and so as to be contactable by a current collector, which projects into the insulation profile, characterised in that one of the arms of the insulation profile (21) has a projection (214), which is set back relative to the shoulder (212) and forms, together with the projection (214) of the insulation profile (21), abutting against the side remote from the projection (214) of the insulation profile (21), of an additional current-collecting rail (11) of the multi-conductor contact line, a guide means for the current collector.

2. A multi-conductor contact line to be assembled from current-collecting rails according to claim 1, characterised in that all of the current-collecting rails, which form the contact line, can be assembled in a force-fitting manner.

3. A multi-conductor contact line to be assembled from current-collecting rails according to claim 1 or claim 2, characterised in that all of the current-collecting rails, which form the contact line, can be assembled in a form-fitting manner.

4. A multi-conductor contact line to be assembled from current-collecting rails according to claim 3, characterised in that the insulation profile (21) is provided with an undercut longitudinal groove (217) on one longitudinal side and with a corresponding tongue (218), which extends over the length of the profile (21), on the other longitudinal side.

5. A multi-conductor contact line to be assembled from current-collecting rails according to one of claims 1 to 4, characterised in that the projection (214) of the insulation profile (21) is outwardly offset so as to form a shoulder (220) which supports the insulation profile (21) of the abutting current-collecting rail (11).

6. A multi-conductor contact line to be assembled from current-collecting rails according to one of claims 1 to 5, characterised by a projection (214) which tapers towards the free end.

7. A multi-conductor contact line to be assembled from current-collecting rails according to one of claims 1 to 6, characterised by a selected breaking point (222) of the insulation profile (21) along the internal edge of the region of the profile (21) relative the projection (214).

8. A multi-conductor contact line to be assembled from current-collecting rails according to one of claims 1 to 7, characterised in that transverse bores (219) are provided at spacings from one another in the rear side of the insulation profile.

9. A multi-conductor contact line to be assembled from current-collecting rails according to one of claims 1 to 8, characterised by the insulation profile (21) being of a flexible configuration.

## Revendications

1. Rail conducteur pouvant être associé à d'autres pour former une ligne de contact à plusieurs conducteurs, ledit rail conducteur étant disposé au fond d'un profil isolant sensiblement en forme de U (21) en étant enserré par des épaulements faisant saillie dans le profil, et pouvant être mis en contact avec un récepteur de courant pénétrant dans le profil isolant, caractérisé en ce que l'une des branches du profil isolant (21) comporte un prolongement de branche (214) qui est situé en retrait par rapport à l'épaulement (212) et qui forme un guidage pour le récepteur de courant avec le prolongement de branche (214) du profil isolant (21) d'un autre rail conducteur (11) composant la ligne de contact à plusieurs conducteurs, ledit profil isolant (21) étant adjacent au côté opposé au prolongement de branche (214) du profil isolant (21).

2. Rail conducteur pouvant être associé à d'autres pour former une ligne de contact à plusieurs conducteurs, selon la revendication 1, caractérisé en ce que tous les rails conducteurs formant la ligne de contact peuvent être réunis par complémentarité de forces.

3. Rail conducteur pouvant être associé à d'autres pour former une ligne de contact à plusieurs conducteurs, selon la revendication 1 ou la revendication 2, caractérisé en ce que tous les rails conducteurs formant la ligne de contact peuvent être réunis par complémentarité de formes.

4. Rail conducteur pouvant être associé à d'autres pour former une ligne de contact à plusieurs conducteurs, selon la revendication 3, caractérisé en ce que le profil isolant (21) est pourvu, sur l'un de ses grands côtés, d'une rainure longitudinale en décrochement (217) et, sur son autre grand côté, d'une languette correspondante (218) qui s'étend sur la longueur du profil (21).

5. Rail conducteur pouvant être associé à d'autres pour former une ligne de contact à plusieurs conducteurs, selon l'une des revendications 1 à 4, caractérisé en ce que le prolongement de branche (214) du profil isolant (21) est déporté vers l'extérieur en formant un épaulement (220) qui surmonte le profil isolant (21) du rail conducteur adjacent (11).

6. Rail conducteur pouvant être associé à d'autres pour former une ligne de contact à plusieurs conducteurs, selon l'une des revendications 1 à 5, caractérisé par un prolongement de branche (214) effilé en direction de son extrémité libre.

7. Rail conducteur pouvant être associé à d'autres pour former une ligne de contact à plusieurs conducteurs, selon l'une des revendications 1 à 6, caractérisé par un point de rupture théorique (22) du profil isolant (21) le long du bord intérieur de la zone du profil (21) définie par le prolongement de branche (214).

8. Rail conducteur pouvant être associé à d'autres pour former une ligne de contact à plusieurs conducteurs, selon l'une des revendications 1 à 7, caractérisé en ce qu'il est prévu des perçages transversaux (219) prévus à distance à l'arrière du profil isolant recevant le rail conducteur.

9. Rail conducteur pouvant être associé à d'autres pour former une ligne de contact à plusieurs conducteurs, selon l'une des revendications 1 à 8, caractérisé par une conception souple du profil isolant (21).
